# NEUE EUROPÄISCHE PATENTSCHRIFT

(11) **EP 1 053 073 B2**
(45) Veröffentlichungstag und Bekanntmachung des Hinweises auf die Entscheidung über den Einspruch: **14.06.2006**
(45) Hinweis auf die Patenterteilung: 10.09.2003
(21) Anmeldenummer: 99907429.7
(22) Anmeldetag: 27.01.1999
(51) Int. Cl.: B24B 9/14

(54) **VERFAHREN UND VORRICHTUNG ZUM BEARBEITEN VON BRILLENGLÄSERN**
METHOD AN DEVICE FOR MACHINING GLASS-LENSES
PROCEDE ET DISPOSITIF POUR USINER DES VERRES DE LUNETTES

(30) Priorität: 05.02.1998 DE 19804542
(43) Veröffentlichungstag der Anmeldung: 22.11.2000
(73) Patentinhaber: Wernicke & Co. GmbH, 40231 Düsseldorf (DE)
(72) Erfinder: GOTTSCHALD, Lutz, D-40670 Meerbusch (DE)
(74) Vertreter: Rehders, Jochen
(86) Internationale Anmeldenummer: PCT/EP1999/000510
(87) Internationale Veröffentlichungsnummer: WO 1999/039869

(56) Entgegenhaltungen:
- EP-A- 0 447 084
- EP-A- 0 532 892
- EP-A- 0 865 871
- EP-A- 0 875 340
- DE-A- 3 933 906
- JP-A- 3 166 050

## Beschreibung

Die Erfindung betrifft ein Verfahren zum Bearbeiten von Brillengläsern mittels einer CNC-gesteuerten Brillenglasbearbeitungsmaschine.

Bekannte CNC-gesteuerte Brillenglasbearbeitungsmaschinen, insbesondere Brillenglasrandbearbeitungsmaschinen, erfordern trotz einer weitgehenden Automatisierung eine besondere Genauigkeit und daher Geschicklichkeit beispielsweise beim Einsetzen eines zu bearbeitenden Rohglases in die Maschine und/oder sind anspruchsvoll sowie kompliziert in ihrer Bedienung hinsichtlich der Eingabe der für die Brillenglasbearbeitung erforderlichen Parameter, die eine Funktion der optometrischen Daten des Brillenträgers, des ausgewählten Brillengestells, des Brillenglasmaterials und dergleichen sind.

In der EP 0 532 892 A1 ist eine Einrichtung zum Schleifen von Brillengläsern mit wenigstens einer Schleifscheibe, einer drehbaren Halterung für einen Brillenglasrohling, einer Einrichtung zum Steuern des Schleifens gemäß vorgebbaren optischen Werten und/oder einer vorgebbaren Umrissgestalt des Brillenglases, einem CNC-gesteuerten Handhabungsgerät zum positionsgenauen Einsetzen eines Brillenglasrohlings in die Halterung, einer Steuereinrichtung für das Handhabungsgerät und einer Eingabevorrichtung für die Dezentrationswerte der vorgegebenen Umrissgestalt in Bezug auf die optische Achse des Brillenglases beschrieben.

In der US-A-5,485,339 ist ein Verfahren zum Herstellen und Liefern von Brillengläsern mittels einer CNC-gesteuerten Brillenglasbearbeitungsmaschine beschrieben, bei dem unter Anderem die optometrischen Daten eines Brillenträgers in einen mit einer Steuereinrichtung der Maschine zusammenwirkenden Rechner, die Augendurchblickpunkte (PD-Werte) des Brillenträgers durch ein ausgewähltes Brillengestell in den Rechner, die Formdaten eines ausgewählten Brillengestells, des Verlaufs und des Umfangs einer Facettennut des Brillengestellts oder einer dem Brillengestell entsprechenden Brillenglasnut oder einer -fase in den Rechner, sowie das Brillenglasmaterial in den Rechner eingegeben, der Verlauf einer Facette, einer Nut oder einer Fase auf dem formbearbeiteten Brillenglas berechnet werden und ein CNC-gesteuertes Bearbeiten des Rohglases, das das Formbearbeiten des Brillenglases und auch das Bearbeiten einer Brillenglasnut und auch das Bearbeiten einer Brillenglasnut oder - fase, gegebenenfalls auch das Bearbeiten der optischen Oberfläche(n) unter Einbeziehung von die Winkellage des in der Brillenglashaltewelle eingespannten Brillenglases senkrecht zur Achse der Brillenglashaltewelle berücksichtigenden Korrekturwerten umfasst, erfolgt.

Bei den bekannten CNC-gesteuerten Brillenglasbearbeitungsmaschinen kommt es immer noch vor, dass sich ein fertig bearbeitetes Brillenglas nicht in das ausgewählte Brillengestell einsetzen lässt und daher nachbearbeitet werden muss.

Der Erfindung liegt das Problem zugrunde, ein Verfahren zum Bearbeiten von Brillengläsern mittels einer CNC-gesteuerten Brillenglasrandbearbeitungsmaschine zu schaffen, durch das die Bedienung der CNC-gesteuerten Brillenglasbearbeitungsmaschine vereinfacht und erleichtert wird und durch das eine erhöhte Genauigkeit des formbearbeiteten Brillenglases erreicht wird.

Ausgehend von dieser Problemstellung wird ein Verfahren zum Bearbeiten von Brillengläsern mittels einer CNC-gesteuerten Brillenglasbearbeitungsmaschine mit den Merkmalen des Anspruchs 1 vorgeschlagen.

Vorteilhafte Ausgestaltungen des Verfahrens ergeben sich aus den Unteransprüchen 2 bis 14.

Die Erfindung wird nachstehend anhand eines in der Zeichnung dargestellten Ausführungsbeispiels des näheren erläutert.

Von einer an sich bekannten, CNC-gesteuerten Brillenglasrandschleifmaschine ist ein Gehäuse 1 dargestellt, in deren Schleifkammer 2 drei Schleifscheiben 3 an einer Welle 4 angeordnet sind. Eine der Schleifscheiben mit zylindrischer Oberfläche dient zum Vorschleifen der Umrißgestalt eines Brillenglases, während die beiden weiteren Schleifscheiben zum Anschleifen unterschiedlicher Dachfacetten an das vorgeschliffene Brillenglas dienen. Eine der Facettennuten ist mit der Bezugsziffer 12 gekennzeichnet. Parallel zur Welle 4 mit den Schleifscheiben 3 sind koaxiale, drehbare, hohle Halbwellen 5, 6 angeordnet, wovon die Halbwelle 6 axial verschiebbar ist. Die Halbwellen 5, 6 weisen an ihren Enden ringförmige Halteköpfe 8 auf, zwischen denen sich ein Rohglas 9 einklemmen läßt. Das Einklemmen kann automatisch oder über eine Handhabe 7 erfolgen. Das Rohglas 9 läßt sich in den Bereich der Halbwellen 5, 6 einschwenken, indem es zunächst an einen nicht dargestellten Halter an einer die Schleifkammer 2 nach außen abschließenden, ebenfalls nicht dargestellten Klappevon Hand angesetzt und am Halterbeispielsweise mittels einer außerhalb des für das Hatten des Rohglases 9 zwischen den Halbwellen 5, 6 benötigten Bereichs der Oberfläche angreifenden, steuerbaren Saugvorrichtung gehalten wird. Eine derartige Vorrichtung ist im einzelnen in der DE 195 37 692 C2 derselben Anmelderin beschrieben.

In der hohlen Halbwelle 6 ist eine Beleuchtungseinrichtung 11 angeordnet, während koaxial dazu in der hohlen Halbwelle 5 eine Erkennungsvorrichtung in Form einer CCD-Kamera angeordnet ist. Diese CCD-Kamera ist in der Lage, übliche Markierungen, z. B. eine auf einem Bildschirm 14 der Brillenglasrandschleifmaschine dargestellte brei-Punkte-Markierung 16 auf dem Rohglas 9 aufzunehmen und in elektrische Signale umzuwandeln. Der mittlere Punkt der Drei-Punkte-Markierung 16 bezeichnet den optischen Mittelpunkt des Rohglases 9, während sich aus den äußeren Punkten die Achsenlage eines zylindrischen oder prismatischen Schliffs ergibt.

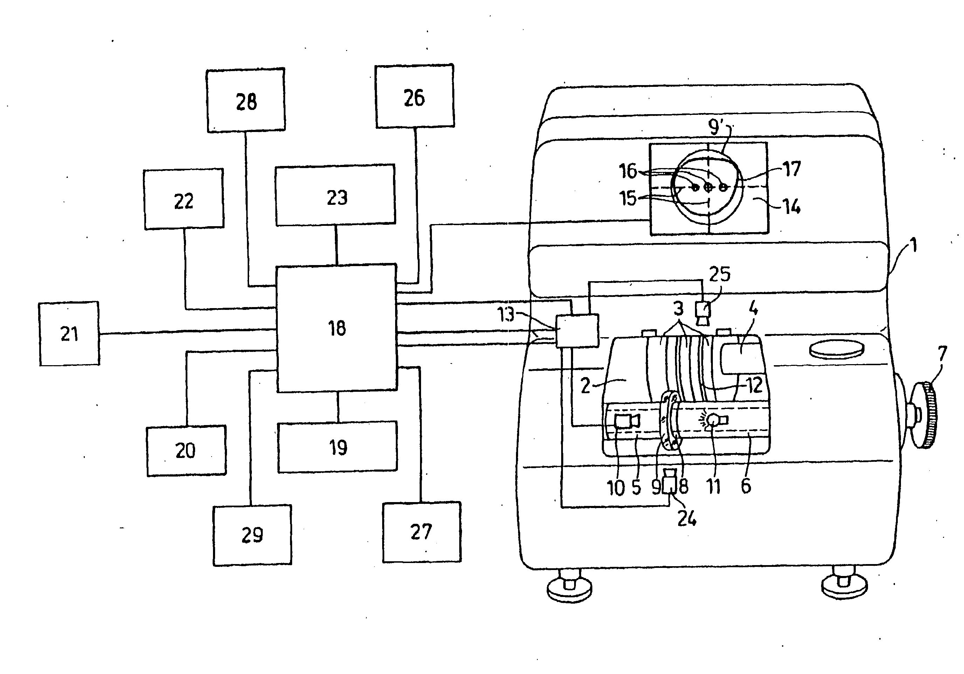

Die von der CCD-Kamera 10 erzeugten Signale gelangen in einen Wandler 13 und werden dort in durch einen Rechner einer Steuereinrichtung 18 rechnerverwertbare Signale umgewandelt, so daß sich das durch die CCD-Kamera 10 aufgenommene Bild 9' des Rohglases 9 mit den Markierungen 16 auf den Bildschirm 14 lagegenau bezüglich eines Achsenkreuzes 15 darstellen läßt.

Ein genaues Positionieren des Rohglases 9 ist nicht erforderlich, da die von der CCD-Kamera 10 aufgenommenen Werte über den Wandler 13 in den Rechner der Steuereinrichtung 18 eingegeben und dort rechnerisch bei der Abbildung auf dem Bildschirm 14 sowie beim CNC-gesteuerten Schleifen des Brillenglases berücksichtigtwerden. Das Rohglas 9 läßt sich daher ohne besondere Anforderungen an die Genauigkeit und Geschicklichkeit der Bedienungsperson von Hand an den Halter am Deckel ansetzen und zwischen die Halbwellen 5, 6 schwenken, da die Lage des optischen Mittelpunkts und die Achsenlage eines zylindrischen oder prismatischen Schliffs durch die CCD-Kamera 10 aufgenommen und in den Rechner der Steuereinrichtung 18 rechnerisch berücksichtigt werden. Die Vorrichtung zum Erkennen der Lage des optischen Mittelpunkts und der Achsenlage eines zylindrischen oder prismatischen Schliffs an einem Rohglas 9 zwischen den Halbwellen 5, 6 ist im einzelnen in der DE 19 52 722 C2 derselben Anmelderin beschrieben.

Dem Bild 9' des Rohglases 9 auf dem Bildschirm 14 wird lagegenau ein Bild 17 des formzuschleifenden Brillenglases bzw. der Brillengestellöffnung einschließlich einer evtl. erforderlichen Dachfacette überlagert, so daß sich beim Betrachten des Bildes 9' des Rohglases 9 und des überlagerten Bildes 17 des Brillenglases feststellen läßt, ob der Rohglasdurchmesser zum Formschleifen des Brillenglases ausreichend ist.

Auf dem Bildschirm 14 lassen sich, gesteuert durch den Rechner der Steuereinrichtung 18 des weiteren in alphanumerischer Form die optometrischen Daten des Brillenträgers, die PD-Werte des Brillenträgers, das Material des Brillenglases, beispielsweise Silikatglas oder Kunststoff wie CR39, Polycarbonat und/oder die Glaskurvendaten, nämlich die Radien R₁, R₂ der optischen Vorderfläche und der optischen Rückfläche, die Mittendicke des Glases und der Rohglasdurchmesser eingeben sowie die Art der anzubringenden Facette, beispielsweise Kaiserfacette, 30%-Facette und ein mittels einer CCD-Kamera 25 aufgenommenes Bild der Facettennut 12 in einer der Schleifscheiben 3 abbilden.

Eine weitere CCD-Kamera 24 ist im Bereich des zwischen den Halbwellen 5, 6 eingespannten Rohglases 9 angeordnet. Diese CCD-Kamera 24 dient dazu, den Rohglasdurchmesser und den Verlauf der Vorder- und Rückkurve am formgeschliffenen Brillenglas als Funktion des Drehwinkels der Halbwellen 5, 6 aufzunehmen und an die Steuereinrichtung 18 über den Wandler 13 zu leiten. Bei geeigneter Anordnung lassen sich die CCD-Kameras 24, 25 auch zu einer einzigen CCD-Kamera zusammenfassen, die sowohl das Rohglas 9 bzw. dasformgeschliffene Brillenglas als auch die Facettennut 12 optisch abtastet.

Statt der CCD-Kameras 10, 24, 25 lassen sich auch Laser-Scanner-Systeme verwenden.

Mit dem Rechner der Steuereinrichtung 18 sind eine Eingabetastatur 19, eine Datenleseeinrichtung 20 zum Einlesen von Daten auf Datenträgern in Form einer Karte mit einem Magnetstreifen, einem Strichcode oder einem CD-Element, ein Diskettenlaufwerk 21 zum Einlesen von auf Disketten gespeicherten Daten, ein Abtastgerät 22 zum Abtasten einer Brillenglasöffnung in einem Brillengestell oder einer Formscheibe und ein Sensor 23 zum Einlesen von auf einem Brillenglas, einer Tüte für ein Brillenglas, auf einem Kasten mit Brillengläsern registrierten Daten, beispielsweise in Form eines Strichcodes oder zum Einlesen von an einem Brillengestell in Form eines Strichcodes, angeordneten Daten in die Steuereinrichtung 18 verbunden. Des weiteren kann auch noch ein Scheitelbrechwertmesser mit dem Rechner der Steuereinrichtung 18 verbunden sein, mit dem sich automatisch die optometrischen Daten eines gegebenen Brillenglases ermitteln und in den Rechner der Steuereinrichtung 18 eingeben lassen.

Der Rechner der Steuereinrichtung 18, der vorzugsweise aus einem Tischrechner (PC) besteht, bildet das Kommandozentrum und die Arbeitsvorbereitung für einen vom Augenoptiker auszuführenden Auftrag. In den Rechner der Steuereinrichtung werden alle Daten gespeichert, verarbeitet, weitergeleitet und abgerufen. Die optometrischen Daten des Brillenträgers, d. h. die Dioptrienzahl des Brillenglases, die Brechungswerte eines zylindrischen oder prismatischen Schliffs sowie deren Achsenlage und die entsprechenden optometrischen Werte eines Nahteils werden in den Rechner der Steuereinrichtung 18 entweder alphanumerisch über die Eingabetastatur 19 oder durch Ablesen von einer Kundenkarte oder Krankenkassenkarte mittels der Datenleseeinrichtung 20 oder durch Eingeben einer Diskette in das Diskettenlaufwerk 21 oder auch durch Vermessen eines vorhandenen Brillenglases des Brillenträgers mittels eines Scheitelbrechwertrnessers eingegeben.

Die Eingabe über eine Datenleseeinrichtung 20, ein Diskettenlaufwerk 21 oder einen Scheitelbrechwertmesser ist bevorzugt, da sich die Eingabetastatur 19 in diesem Fall besonders einfach gestalten läßt und nur maximal fünf Tasten, eine Taste zum Einschalten, eine Taste zum Eingeben des Startsignals, eine Taste zum Ansteuem eines Nachschliffs, eine Taste zum Abbrechen oder Unterbrechen eines Schleifvorgangs und eine Stop-Taste aufweisen muß. Über die Datenleseein- ' richtung 20 oder das Diskettenlaufwerk 21 lassen sich auch die Formdaten der Brillenglasöffnung eines ausgewählten Brillengestells in die Steuereinrichtung 18 eingeben, wenn diese Daten in einer auf einer Karte oder einer Diskette gespeicherten Form, beispielsweise vom Brillengestellhersteller mit dem Brillengestell mitgeliefert, vorliegen.

Ist dies nicht der Fall, läßt sich die Brillengestellöffnung eines ausgewählten Brillengestells mittels einer Abtastvorrichtung 22 abtasten. Dieses Abtasten kann bevorzugt berührungslos, beispielsweise mittels eines Video-Abtastsystems, wie es in der DE 40 19 866 A1 derselben Anmelderin beschrieben ist, durchführen. Mit diesem Video-Abtastsystem läßt sich die Brillenglasöffnung einschließlich dem Verlauf der Facettennut dreidimensional einschließlich der Querschnittsform aufnehmen und in den Rechner der Steuereinrichtung 18 eingeben.

Der Pupillenabstand und die Lage der Pupillen mit Bezug auf ein ausgewähltes Brillengestell (PD-Werte) lassen sich entweder in üblicher Weise durch den Augenoptiker bestimmen und alphanumerisch in den Rechner der Steuereinrichtung 18 über die Tastatur 19 eingeben, oder die PD-Werte werden vom Brillenträger mit aufgesetztem, ausgewählten Brillengestell mittels eines Videosystems 28 aufgenommen und ausgewertet und direkt dem Rechner der Steuereinrichtung 18 zugeleitet. Ein derartiges Videosystem ist unter dem Namen "Video-Infral" der Rodenstock AG bekannt.

Die Glaskurvendaten R₁, R₂ und die Mittendikke können auch in den Rechner der Steuereinrichtung 18 mittels der Eingabetastatur 19 oder mittels Strichcode auf einem Rohglas, einerTütefürein Rohglas oder einem Kasten für Rohgläser eingegeben werden. Der Rechner der Steuereinrichtung 18 berechnet aus den eingegebenen Daten die Formdaten zum Formschleifen des Rohglases 19 entsprechend der Form des Brillenglases, die sich aus dem ausgewählten Brillengestell ergibt und steuert damit das Formschleifen mittels der Schleifscheiben 3.

Zum Schleifen der Facette rechnet der Rechner der Steuereinrichtung 18 aus den Brillengestelldaten und den Rohglasdaten einen Facettenverlauf, der beispielsweise genau dem Verlauf und dem Umfang der Facettennut im ausgewählten Brillengestell entsprechen kann. Ebenso ist es möglich, einen Facettenverlauf vorzugeben, beispielsweise eine 30%-Facette, und der Rechner in der Steuereinrichtung 18 prüft, ob dieser vorgegebene Facettenverlauf mit dem vorgegebenen Rohglas möglich ist und bezüglich seines Umfangs mit dem Umfang der Facettennut im ausgewählten Brillengestell übereinstimmt. Ist dies nicht der Fall, führt der Rechner in der Steuereinrichtung 18 eine Korrektur, beispielsweise durch eine Verlagerung des Facettenverlaufs durch, wonach der Facettenschliff durchgeführt wird.

Des weiteren ist es möglich, mittels der CCD-Kamera 24 die Raumkurve der Vorderkante und der Rückkante des formgeschliffenen Brillenglases dreidimensional zu vermessen und über den Wandler 13 an die Steuereinrichtung 18 zu leiten. Anhand dieser Daten kann der Rechner in der Steuereinrichtung 18 einen Facettenverlauf berechnen, der beispielsweise aus dem Mittelwert aus dem Verlauf der Vorderkante und der Rückkante des formgeschliffenen Brillenglases gebildet wird oder von der Vorderkante einen gleichbleibenden Abstand aufweist.

Anstelle der CCD-Kamera 24 ist auch möglich, ein mechanisches Abtastsystem für den Verlauf der Vorderkante und der Rückkante des formgeschliffenen Brillenglases und für die Kontur des formgeschliffenen Brillenglases vorzusehen, mit dem entsprechende Wandler zum Erzeugen von durch die Steuereinrichtung 18 aufnehmbare und verarbeitbare elektrische Signale verbunden sind. Derartige elektromechanische Abtastvorrichtungen für den Verlauf der Vorderkante und der Rückkante des formgeschliffenen Brillenglases und der Kontur eines formgeschliffenen Brillenglases mit Soll-Ist-Wert-Vergleich sind in der DE 42 08 835 C2 und der DE 43 20 934 C2 derselben Anmelderin beschrieben. Der Verlauf der Vorderkante und der Rückkante kann auch aus den Radien derVorder-und Rückfläche sowie der Mittendicke berechnet und/oder aus einem Rechner für die Oberflächenbearbeitung übemommen werden. Dieser Rechner für die Oberflächenbearbeitung (RX-Rechner) kann derselbe Rechner wie der für die Randbearbeitung sein.

Die durch die CCD-Kamera 25 aufgenommene Facettennut 12 wird im Rechner der Steuereinrichtung 18 mit dem Bild dermittels der Brillengestellabtastvorrichtung 22 aufgenommenen Facettennut verglichen. Durch diesen Vergleich kann der Rechner der Steuereinrichtung 18 entweder, bei Übereinstimmung der Facettennuten, den Steuerbefehl zum Schleifen der Facette am Brillenglas erteilen, oder eine Korrektur des Schleifens der Facette bewirken, wenn die Abweichung zwischen der Facettennut 12 in der Schleifscheibe und der Facettennut im Brillengestell einen vorgebbaren Wert nicht überschreitet oder den Schleifvorgang abbrechen, wenn die Abweichung außerhalb der vorgegebenen Toleranz liegt.

Mit dem Rechner der Steuereinheit 18 kann auch ein Hostrechner 30 verbunden sein, der dann extern die Berechnungen vornimmt und mehrere Maschinen und Geräte im Multitasking-Betrieb steuern kann.

Mit dem erfindungsgemäßen Verfahren zum Bearbeiten von Brillengläsern läßt sich somit zunächst ein ausgewähltes Brillengestell berührungslos mit Bildauswertung abtasten, wobei die Werte r = f (γ) und z = f (γ) sowie der Umfang U erfaßt werden, hierbei sind r der Radius der Brillengestellöffnung als Funktion vom Winkel γ, z die Koordinate in einer Richtung senkrecht zur Ebene des Brillengestells und U der Umfang der Facettennut. Zusätzlich wird auch die Form der Facettennut als Funktion von γ ermittelt und mit der berührungslosen Messung der Facettennut im Schleifwerkzeug verglichen. Ziel ist es, im vorhinein Korrekturwerte beim Schleifen zu ermitteln, auch wenn die Facettennut des Schleifwerkzeugs mit der Facettennut des Brillengestells nicht übereinstimmt.

Des weiteren wird das Rohglas entsprechend seinen Markierungen berührungslos vermessen, einschließlich des Umfangs und ohne Block in der Maschine geschliffen, indem die Fassungsform der Lage des Rohglases zwischen den Halbwellen 5, 6 rechnerisch zugeordnet wird, einschließlich vorgegebener Dezentrations-(PD-)Werte.

Das Brillenglas braucht nach dem Vermessen der Lage, der Form und der Kennzeichnung mittels einer der Maschine fest zugeordneten Vorrichtung, die auch in der Maschine selbst angeordnetsein kann, nicht mehr in die Hand genommen zu werden, da in der Maschine des weiteren der Verlauf der Raumkurve der Vorderkante z₁ = f (γ) und der Rückkurve z₂ = f (g) berührungslos gemessen und im Rechner der Verlauf der Facettenkurve ermittelt und zum Steuern des Schleifvorgangs verwendet wird.

Somit wird das Brillenglas nach Einlegen des Rohglases bis zur Fertigstellung des formgeschliffenen und mit einer Facette versehenen Brillenglases nicht mehr aus der Maschine herausgenommen, so daß sich keine Abweichungen von Schritt zu Schritt akkumulieren können.

Sollten sich dennoch beim Bearbeiten von Brillengläsern Fehlereinstellen, ist es möglich, überein Modem 27 eine Verbindung zum Maschinenhersteller herzustellen, der auf diese Weise die Möglichkeit hat, den Rechner der Steuereinrichtung 18 mit allen angeschlossenen Eingabevorrichtungen und die Brillenglasrandschleifmaschine mittels eines Prüfprogramms zu prüfen und eine Fehlerdiagnose zu erstellen, die an den Augenoptikerzurück übermittelt wird und ihm auf dem Bildschirm 14 Anweisungen erteilt, auf welche Weise sich der Fehler abstellen läßt bzw. ob die Maschine reparaturbedürftig ist.

## Patentansprüche

1. Verfahren zum Bearbeiten von Brillengläsern mittels einer CNC-gesteuerten Brillenglasbearbeitungsmaschine mit den Schritten:
- Eingeben der optometrischen Daten des Brillenträgers, d. h. Dioptrienzahl, Werte und Winkel eines zylindrischen oder prismatischen Schliffs, Stärke und Lage eines Nahteils in einen mit einer Steuereinrichtung der Maschine zusammenwirkenden Rechner,
- Eingeben der Augendurchblickpunkte (PD-Werte) des Brillenträgers durch ein ausgewähltes Brillengestell in den Rechner,
- Eingeben der Formdaten eines ausgewählten Brillengestells, des Verlaufs, der Form und des Umfangs einer Facettennut des Brillengestells oder einer dem Brillengestell entsprechenden Brillenglasnut oder einer - fase in den Rechner,
- Eingeben des Brillenglasmaterials, d. h. Silikatglas oder Kunststoff wie CR39 oder Polycarbonat, in den Rechner,
- Berechnen des erforderlichen Rohglasdurchmessers im Rechner und Anzeigen des Rohglasdurchmessers,
- Einsetzen eines ungeblockten Rohglases mit dem erforderlichen Durchmesser in die Maschine,
- Prüfen der Lage des optischen Mittelpunkts und der Achsenlage eines zylindrischen oder prismatischen Schliffs des in die Maschine eingesetzten Rohglases,
- Errechnen des Verlaufs einer Facette, einer Nut oder einer Fase auf dem formbearbeiteten Brillenglas aus wenigstens einem der Parameter: optometrische Daten, PD-Werte, Formdaten, Radien der Vorder- und Rückfläche sowie Mittendicke des Brillenglases,
- rechnerisches Vergleichen der Form der Facettennut im ausgewählten Brillengestell mit der Form der Facettennut in einem Brillenglasrandbearbeitungswerkzeug in der Maschine,
- rechnerische Entscheidung, ob das Bearbeiten der Facette ohne oder mit rechnerischer Berücksichtigung von Korrekturwerten möglich ist oder nicht und
- Einrechnen der Lage des Rohglases in die Bearbeitungsdaten,
- Einrechnen der Korrekturwerte in die Bearbeitungsdaten vor dem CNC-gesteuerten Bearbeiten des Rohglases in Abhängigkeit von vorgegebenen Bearbeitungs-, Werkstück- und Werkzeugtoleranzen und festgestellten Abweichungen,
- CNC-gesteuertes Bearbeiten des Rohglases, das das Formbearbeiten des Brillenglases und auch das Bearbeiten einer Facette, einer Brillenglasnut oder -fase, ggf. auch das Bearbeiten der optischen Oberfläche (n) umfasst.

2. Verfahren nach Anspruch 1, bei dem eine Kontrollanzeige der eingegebenen Werte, des erforderlichen Rohglasdurchmessers und ein lagerichtiges Abbilden des Rohglases und dazu überlagert der Brillenglasform auf einem Bildschirm erfolgt.

3. Verfahren nach Anspruch 1 oder 2, bei dem ein Abbilden und Zuordnen der Facettennut im Brillengestell und der sich aus der Facettennut im Brillenglasbearbeitungswerkzeug ergebenden Facette auf dem Umfang des Brillenglases auf einem Bildschirm erfolgt.

4. Verfahren nach einem der Anspruche 1 bis 3, bei dem das Eingeben der für die Brillenglasbearbeitung erforderlichen Daten in maschinenlesbarer Form erfolgt.

5. Verfahren nach Anspruch 4, bei dem die erforderlichen Daten wenigstens teilweise auf wenigstens einem Datenträger, wie Magnetstreifenkarte, Strichcodekarte oder Karte mit CD-Element oder einer Diskette gespeichert sind.

6. Verfahren nach einem der Ansprüche 1 bis 5, bei dem die PD-Werte durch ein automatisches Video-Aufnahme-System ermittelt und die Daten an den Rechner geleitet werden.

7. Verfahren nach einem der Ansprüche 1 bis 6, bei dem die Formdaten eines ausgewählten Brillengestells einschließlich des Facettenverlaufs, der Facettenform und des Umfangs berührungslos in einer Abtastvorrichtung ermittelt und an den Rechner geleitet werden.

8. Verfahren nach einem der Ansprüche 1 bis 7, bei dem die Abmessungen und die Form der Facettennut in dem Brillenglasrandbearbeitungswerkzeug berührungslos durch ein Video-Aufnahme-System oder Laser-Scanner-System ermittelt und die Daten an den Rechner geleitet werden.

9. Verfahren nach einem der Ansprüche 1 bis 8,bei dem der Verlauf der Vorderkante und der Rückkante eines formbearbeiteten Brillenglases in der Maschine berührungslos durch ein Video-Aufnahme-System oder ein Laser-Scanner-System abgetastet wird, die Daten an den Rechner geleitet werden und daraus im Rechner der Verlauf einer für das ausgewählte Brillengestell geeigneten Facette berechnet und zum Steuern der Facettenbearbeitung verwendet wird.

10. Verfahren nach einem der Ansprüche 1 bis 8, bei dem der Verlauf der Vorderkante und der Rückkante einer Brillenglasform entsprechend einem ausgewählten Brillengestell aus wenigstens einem der Parameter: optometrische Daten, PD-Werte, Formdaten, Radien der Vorder- und Rückfläche sowie Mittendicke durch den Rechner berechnet und daraus der Verlauf einer für das ausgewählte Brillengestell geeigneten Facette berechnet und zum Steuern der Facettenbearbeitung verwendet wird.

11. Verfahren nach Anspruch 10, bei dem der Verlauf der Vorderkante und der Rückkante aus den Radien der Vorder- und Rückfläche sowie der Mittendicke berechnet und/oder aus einem Rechner für die Oberflächenbearbeitung übernommen wird.

12. Verfahren nach einem der Ansprüche 1 bis 11, bei dem die eingegebenen und errechneten Daten als Bestelldaten für das Rohglas durch Datenfernübertragung an einen Brillenglashersteller übermittelt werden.

13. Verfahren nach einem der Ansprüche 1 bis 12, bei dem die eingegebenen und errechneten Daten als Bestelldaten für das fertigbearbeitete Brillenglas durch Datenfernübertragung an einen Brillenglashersteller übermittelt werden.

14. Verfahren nach Anspruch 12, bei dem das bestellte und eingegangene Rohglas in einer an die Steuereinrichtung angeschlossenen Brillenglasbearbeitungsmaschine fertig bearbeitet wird.

## Claims

1. A method for machining spectacle lenses by means of a CNC spectacle-lens machining unit, comprising the steps:
- entering the optometric data of the spectacle wearer, i. e. dioptre number, values and angles of a cylindrical or prismatic component, strength and position of a near portion, into a computer which cooperates with a control means of the unit,
- entering the eye viewing points (PD values) of the spectacle wearer through a selected spectacle frame into the computer,
- entering the form data of a selected spectacle frame, the curve, the shape and the periphery of a facet groove of the spectacle frame or a spectacle-lens groove or bevel corresponding to the spectacle frame into the computer,
- entering the lens material, i. e. silicate glass or plastics material such as CR39 or polycarbonate into the computer,
- calculating the necessary lens blank diameter in the computer and displaying the lens blank diameter,
- inserting an unblocked lens blank of the required diameter into the unit,
- checking the position of the optical centre and of the axis of a cylindrical or prismatic component of the lens blank inserted into the unit,
- calculating the curve of a facet, a groove or a bevel on the form-machined lens from at least one of the parameters: optometric data, PD values, form data, radii of the front and rear surface and centre thickness of the lens,
- computerised comparison of the shape of the facet groove in the selected spectacle frame with the shape of the facet groove in a spectacle-lens edge machining tool in the unit and
- computerised decision as to whether or not it is possible to machine the facet with or without computerised consideration of correction values,
- factoring the position of the lens blank into the machining data,
- factoring the correction values into the machining data before the CNC-machining of the lens blank as a function of preset machining, workpiece and tool tolerances and established deviations,
- CNC machining of the lens blank which comprises at least the form machining of the lens, and also the machining of a facet, a lens groove or bevel, optionally also the machining of the optical surface(s).

2. A method according to Claim 1, in which a control display of the entered values, of the required lens blank diameter and mapping in the correct position of the lens blank and superposed thereon of the lens shape takes place on a screen.

3. A method according to Claim 1 or 2, in which mapping and allocation of the facet groove in the spectacle frame and of the facet yielded from the facet groove in the spectacle-lens machining unit on the periphery of the lens takes place on a screen.

4. A method according to one of Claims 1 to 3, in which the data necessary for machining the lens are entered in machine-readable form.

5. A method according to Claim 4, which the necessary data are stored at least partly on at least one data carrier, such as a magnetic-strip card, barcode card or card with CD element or a diskette.

6. A method according to one of Claims 1 to 5, in which the PD values are determined by an automatic video recording system and the data are passed on to the computer.

7. A method according to one of Claims 1 to 6, in which the form data of a selected spectacle frame including the facet curve, the facet shape and the periphery are determined in contact-free manner in a scanning device and are passed on to the computer.

8. A method according to one of Claims 1 to 7, in which the dimensions and the shape of the facet groove in the spectacle-lens edge machining tool are determined in contact-free manner by a video recording system or laser scanner system and the data are passed on to the computer.

9. A method according to one of Claims 1 to 8, in which the curve of the front edge and of the rear edge of a form-machined spectacle lens is scanned in the unit in contact-free manner by a video recording system or a laser scanner system, the data are passed on to the computer and the curve of a facet suitable for the selected spectacle frame is calculated therefrom in the computer and is used to control the facet machining.

10. A method according to one of Claims 1 to 9, in which the curve of the front edge and of the rear edge of a spectacle-lens form is calculated by the computer corresponding to a selected spectacle frame from at least one of the parameters: optometric data, PD values, form data, radii of the front and rear surface and centre thickness and the curve of a facet suitable for the selected spectacle frame is calculated therefrom in the computer and is used to control the facet machining.

11. A method according to Claim 10, in which the curve of the front edge and of the rear edge is calculated from the radii of the front and rear surfaces and the centre thickness and/or is taken over from a computer for the surface machining.

12. A method according to Claims 1 to 11, in which the entered and calculated data are transmitted to a spectacle-lens manufacturer as ordering data for the lens blank by remote data transmission.

13. A method according to one of Claims 1 to 12, in which the entered and calculated data are transmitted to a spectacle-lens manufacturer as ordering data for the finish-machined lens by remote data transmission.

14. A method according to Claim 12, in which the ordered and received lens blank is finish-machined in a spectacle-lens machining unit connected to the control means.

## Revendications

1. Procédé d'usinage de verres de lunettes au moyen d'une machine à usiner des verres de lunettes à commande numérique comportant les étapes suivantes :
- saisie des données optométriques de l'utilisateur de lunettes, c'est-à-dire nombre de dioptries, valeurs et angles d'une taille cylindrique ou prismatique, dioptries et position d'une partie pour vision de près dans un ordinateur coopérant avec un dispositif de commande de la machine,
- introduction dans l'ordinateur des centres des yeux (valeurs PD) de l'utilisateur des lunettes par une monture de lunettes choisie,
- introduction dans l'ordinateur des données de forme d'une monture de lunettes choisie, du tracé de la forme du périmètre d'une rainure de facette de la monture de lunettes ou d'une rainure ou chanfrein des verres de lunettes correspondant à la monture de lunettes,
- introduction dans l'ordinateur du matériau du verre de lunettes, c'est-à-dire verre au silicate ou matière plastique tel que CR39 ou polycarbonate,
- calcul dans l'ordinateur du diamètre nécessaire du verre brut et indication du diamètre du verre brut,
- introduction dans la machine d'un verre brut avec le diamètre nécessaire sans utilisation d'un bloc,
- contrôle de la position du centre optique et de l'axe d'une composante cylindrique ou prismatique du verre brut inséré dans la machine,
- calcul du tracé d'une facette, d'une rainure ou d'un chanfrein sur le verre de lunettes usiné à la forme à partir d'au moins l'un des paramètres : données optométriques, valeurs PD, données de forme, rayons de la face avant et de la face arrière ainsi qu'épaisseur centrale du verre de lunettes,
- comparaison par le calcul de la forme de la rainure de facette dans la monture de lunettes choisie et de la forme de la rainure de facette dans un outil d'usinage du bord de verres de lunettes dans la machine,
- décision par le calcul de la possibilité ou non d'usiner la facette sans ou avec prise en compte par le calcul de valeurs de correction,
- calcul de la position du verre brut dans les données d'usinage,
- calcul des valeurs de correction dans les données d'usinage avant l'usinage à commande numérique du verre brut en fonction de tolérances prédéfinies d'usinage, de pièces et d'outils et d'écarts constatés,
- usinage à commande numérique du verre brut qui comprend au moins l'usinage à la forme du verre de lunettes, et également l'usinage d'une facette, d'une rainure de verre de lunettes ou d'un chanfrein de verre de lunettes, éventuellement aussi l'usinage de la (des) surface(s) optique(s).

2. Procédé selon la revendication 1, dans lequel apparaît sur un écran un affichage de contrôle des valeurs introduites, du diamètre nécessaire du verre brut et une reproduction en position correcte du verre brut et, superposée à ceux-ci, la forme du verre de lunettes.

3. Procédé selon la revendication 1 ou 2, dans lequel apparaît sur un écran une reproduction et une affectation de la rainure de facette dans la monture de lunettes ainsi que de la facette sur le pourtour du verre de lunettes, résultant de la rainure de facette dans l'outil d'usinage de verres de lunettes.

4. Procédé selon l'une des revendications 1 à 3, dans lequel l'introduction des données nécessaires à l'usinage du verre de lunettes s'effectues sous une forme lisible par la machine.

5. Procédé selon la revendication 4, dans lequel des données nécessaires son mémorisées au moins en partie sur au moins un support de données, tel que carte à bande magnétique, carte à code barre ou carte avec élément CD ou sur une disquette.

6. Procédé selon l'une des revendications 1 à 5, dans lequel les valeurs PD sont déterminées par un système automatique d'enregistrement vidéo et les données sont acheminées vers l'ordinateur.

7. Procédé selon l'une des revendications 1 à 6, dans lequel les données de forme d'une monture de lunettes choisie, y compris du tracé de la facette, de la forme de la facette et du périmètre sont déterminées sans contact dans un dispositif de palpage et sont acheminées vers l'ordinateur.

8. Procédé selon l'une des revendications 1 à 7, dans lequel les dimensions et la forme de la rainure de facette dans l'outil d'usinage du bord de verres de lunettes sont déterminées sans contact par un système d'enregistrement vidéo ou un système scanner à laser et les données son acheminées vers l'ordinateur.

9. Procédé selon l'une des revendications 1 à 8, dans lequel le tracé du bord avant et du bord arrière d'un verre de lunettes mis à la forme est palpé dans la machine sans contact par un système d'enregistrement vidéo ou un système scanner à laser, les données sont acheminées vers l'ordinateur et à partir de celles-ci est calculé dans l'ordinateur le tracé d'une facette convenant à la monture de lunettes choisie et ce tracé est utilisé pour commander l'usinage de la facette.

10. Procédé selon l'une des revendications 1 à 9, dans lequel le tracé du bord avant et du bord arrière d'une forme de verres de lunettes est calculé par l'ordinateur conformément à une monture de lunettes choisie, à partir d'au moins l'un des paramètres : données optométriques, valeurs PD, données de forme, rayons de la face avant et de la face arrière ainsi qu'épaisseur centrale et à partir de ceci le parcours d'une facette convenant à la monture de lunettes choisie est calculé et utilisé pour commander l'usinage de la facette.

11. Procédé selon la revendication 10, dans lequel le tracé du bord avant et du bord arrière est calculé à partir des rayons de la face avant et de la face arrière ainsi que de l'épaisseur centrale et/ou est repris d'un ordinateur pour l'usinage de la surface.

12. Procédé selon l'une des revendications 1 à 11, dans lequel les données introduites et calculées sont transmises en tant que données de commande pour le verre brut par télétransmission de données à un fabricant de verres de lunettes.

13. Procédé selon l'une des revendications 1 à 12, dans lequel les données introduites et calculées sont transmises en tant que données de commande pour le verre de lunettes usiné fini par télétransmission de données à un fabricant de verres des lunettes.

14. Procédé selon la revendication 12, dans lequel le verre brut commandé et fourni est usiné fini dans une machine d'usinage de verres de lunettes raccordée au dispositif de commande.
